# EUROPEAN PATENT APPLICATION

(11) **EP 2 472 358 A1**
(43) Date of publication of application: **04.07.2012**
(21) Application number: 11171530.6
(22) Date of filing: 27.06.2011
(51) Int. Cl.: G06F 3/02, G06F 3/023

(54) **Switching device and method for input unit**

(30) Priority: 31.12.2010 TW 099147255
(71) Applicant: Giga-Byte Technology Co., Ltd., Hsin Tien 231, Taipei County (TW)
(72) Inventor: Chao, Ching-Hung, 231 Hsin Tien (TW); Ma, Mo-Ming, 231 Hsin Tien (TW)
(74) Representative: Schwerbrock, Florian

(57) **Abstract**

A input device and switching method thereof is provided. After a first input unit produces the input signals, a control unit turns off the a switch interface to disconnect signal path between a second input unit and the computer system. When a counting time is greater than a predefined time, the control unit activates the switch interface to reconnect signal path between the second input unit and the computer system. Thus, it can prevent unintentional input from touching a plurality of input units by the users..

## Description

### BACKGROUND OF THE INVENTION

### Field of the Invention

The present invention relates to an input device with an input switch and a switching method thereof, and more particularly to an input device with the input switch and a switching method thereof applied to computer.

### Description of the Prior Art

The input unit is the passageway for the computer to receive input data. The user can input data through the input unit. The input data will be transformed into an electronic signals by the input unit and stored in the main memory. Computer device such as keyboard, card reader, mouse, light pen, bar code reader, scanner, and digital camera are belonged to the input unit category.

The conventional computer system has a plurality of input units. However, when the user manipulates a certain input unit, the computer system will not turn off other idle input unit automatically. Thereby, a common defect is emerged. When the user try to manipulate a certain input unit but unintentionally touches other input units, a fault signals is sent into the computer and disturbing the user's normal operating condition if an automatic switching system does not exist, herein the automatic switching system can turn off those idle input units

Currently, neither a method nor a software system can automatically detect the input source and turn off the other input units, the user can only turn on/off the input unit by themselves to prevent the faulty operation. As a result, it is necessary to develop an input device to prevent unintentional input from touching a plurality of input units by the users..

### Summary of the Invention

The main objective of the present invention is to provide an input device with the input switch and a switching method thereof applied to the computer, which aims to prevent unintentional input from touching a plurality of input units. According to the present invention of the input device with the input switch and switching method thereof, after a first input unit produces an input signal, a control unit turns off a switch interface to disconnect signal path between a second input unit and the computer system; when a counting time is greater than a predefined time, the control unit activates the switch interface to reconnect signal path between the second input unit and the computer system. Thus, it can prevent the faulty operation by the users. The present invention may best be understood through the following description with reference to the accompanying drawings.

### BRIEF DESCRIPTION OF THE DRAWINGS

Fig.1 is the first schematic diagram of the input device with the input switch according to the present invention;
Fig.2 is the first schematic diagram of the input device with the input switch according to the present invention; and
Fig.3 is the second schematic diagram of the input device with the input switch according to the present invention.

### DETAILED DESCRIPTION OF THE INVENTION

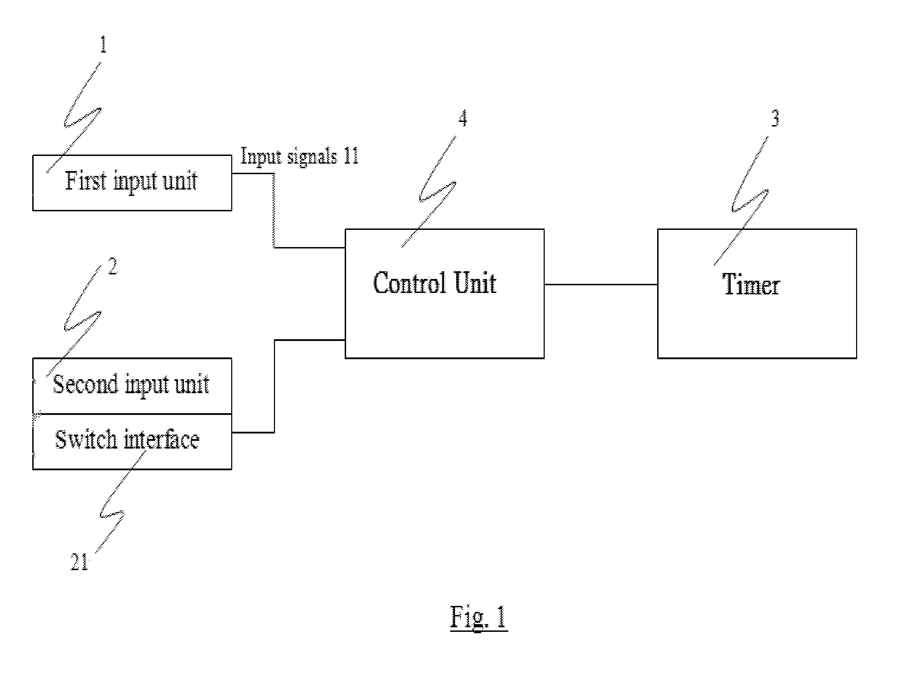

Fig.1 is the first schematic diagram of the input device with the input switch according to the present invention. As shown in Fig.1, the first embodiment of input device with the input switch in accordance with the present invention includes a first input unit 1 for producing input signals 11, a second input unit 2 having switch interface 21, a timer 3 for setting a predefined time (not shown) and producing a counting time (not shown), and a control unit 4. The control unit 4 turns off the switch interface 21 and activates the timer 3 to produce the counting time after receiving the input signals 11. If the counting time is greater than the predefined time, the control unit 4 activates the switch interface 21.

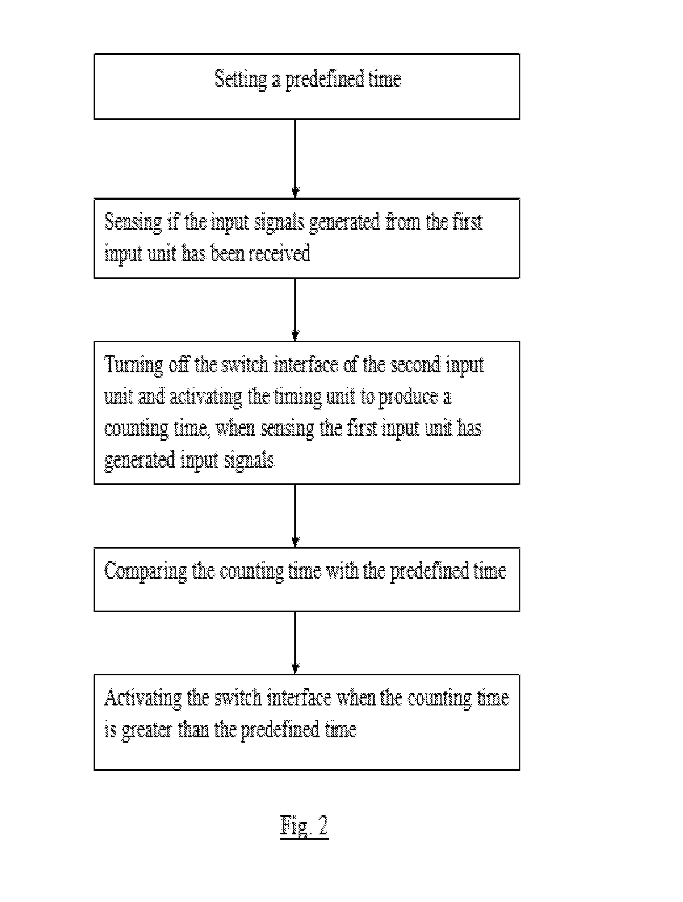

Fig.2 is the first schematic diagram of the switching method of the input device in accordance with the present invention. As shown in Fig.2, the switching method of the input device in accordance with the present invention includes the following steps:
setting a predefined time (not shown);
sensing if the input signals 11 produced from the first input unit 1 have been received;
turning off the switch interface 21 of the second input unit 2 and activating the timer 3 to produce a counting time, when sensing the first input unit 1 has produced input signals 11;
comparing the counting time with the predefined time; and
when the counting time is greater than the predefined time, activating the switch interface 21.

Therefore, according to the present disclosure, after the first input unit 1 produces the input signals 11, the control unit 4 turns off the switch interface 21 to disconnect signal path between the second input unit 2 and the computer system; and when the counting time is greater than the predefined time, the control unit 4 activates the switch interface to reconnect signal path between the second input unit 2 and the computer system. Thus, it can prevent unintentional input from touching a plurality of input units by the users..

The present disclosure further discloses another embodiment in below. The predefined time and the counting time use millisecond value as the minimum unit for measurement. When a timer 3 is activated, it transforms a start millisecond value based on year, month, date, hour, minute, and second. The start millisecond value is set as base value and starts accumulation by 1 millisecond.

Another embodiment is described here. When a timer 3 is activated, it transforms a start millisecond value based on year, month, date, hour, minute, and second. The start millisecond value is set as base value and starts accumulation by 100 milliseconds.

In addition, according to a preferred embodiment, the range of the predefined time is from 10 milliseconds to 130 milliseconds.

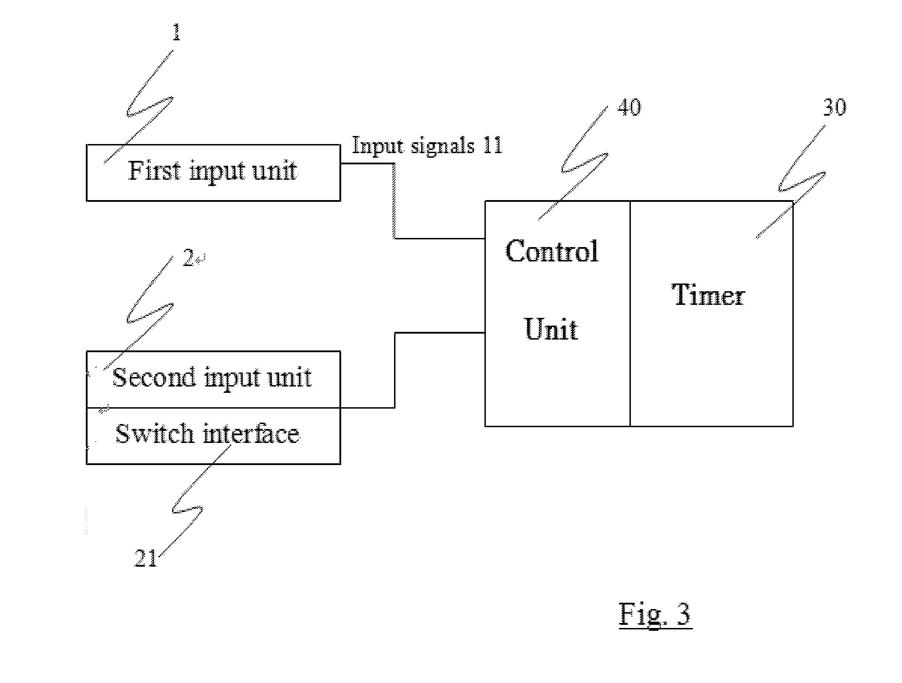

Finally, referring to Fig.3, Fig.3 shows the second schematic diagram of the input device with the input switch in accordance with the present invention. This embodiment illustrated in Fig.3 is approximately similar to the embodiment in Fig.1. The difference is that the timer 30 is included in the control unit 40.

## Claims

1. An input device, comprising:
a first input unit producing input signals;
a second input unit comprising a switch interface;
a timer setting a predefined time and producing a counting time; and
a control unit, wherein the control unit turns off the switch interface and activates the timer to start the counting time when the control unit receives the input signals.

2. The input device according to claim 1, wherein the control unit compares the counting time with the predefined time and activates the switch interface.

3. The input device according to claim 2, wherein the predefined time and the counting time are counted with millisecond as the minimum unit of measurement.

4. The input device according to claim 3, wherein when the timer is activated, the timer transforms a start millisecond value based on year, month, date, hour, minute, and second.

5. The input device according to claim 4, wherein the calculation of the counting time is setting the start millisecond value as base value and starting accumulation by 1 millisecond.

6. The input device according to claim 4, wherein the calculation of the counting time is setting the start millisecond value as base value and starting accumulation by 100 milliseconds.

7. The input device according to claim 3, wherein the range of the predefined time is from 10 milliseconds to 130 milliseconds.

8. A switching method for an input device, comprising steps of:
setting a predefined time;
sensing if the input signals generated from the first input unit have been received;
turning off the switch interface of the second input unit and activating the timing unit to produce a counting time when the input signals have generated by the first input unit;
comparing the counting time with the predefined time; and
activating the switch interface when the counting time is greater than the predefined time.

9. The switching method of the input device according to claim 8, wherein the predefined time and the counting time use millisecond value as the minimum unit of measurement.

10. The switching method of the input device according to claim 9, wherein, when the timer is activated, the timer generates a start millisecond value based on year, month, date, hour, minute, and second.

11. The switching method of the input device according to claim 10, wherein the calculation of the counting time is setting the start millisecond value as base value and starting accumulation by 1 millisecond.

12. The switching method of the input device according to claim 10, wherein the calculation of the counting time is setting the start millisecond value as base value and starting accumulation by 100 milliseconds.

13. The switching method of input device according to claim 9, wherein the range of the predefined time is from 10 milliseconds to 130 milliseconds.
